# DEMANDE DE BREVET EUROPEEN

(11) **EP 1 096 828 A1**
(43) Date de publication de la demande: **02.05.2001**
(21) Numéro de dépôt: 00402973.2
(22) Date de dépôt: 26.10.2000
(51) Int. Cl.: H04Q 11/04

(54) **Procédé et dispositif pour la communication à travers un réseau RNIS**

(30) Priorité: 27.10.1999 FR 9913429
(71) Demandeur: SAGEM SA, 75116 Paris (FR)
(72) Inventeur: Sesques, Pascal, 95610 Eragny sur Oise (FR)
(74) Mandataire: Bloch, Gérard

(57) **Abrégé**

Procédé pour la communication d'un terminal de communication (1) à travers un réseau RNIS (100), par l'intermédiaire d'un adaptateur RNIS (2), dans lequel, après avoir implémenté au moins une couche logicielle supérieure (14) et une couche logicielle inférieure (24) d'une interface RNIS, respectivement dans le terminal (1) et dans l'adaptateur (2), on connecte l'adaptateur (2) au terminal (1), la couche inférieure (24) s'enregistre auprès de la couche supérieure (14) et, les deux couches (14, 24) comportant chacune une librairie de fonctions (17, 26), elles s'échangent des pointeurs (18, 27) d'adressage de leurs fonctions respectives afin d'appeler ultérieurement leurs fonctions mutuelles à l'aide desdites informations d'adressage.

## Description

Certains ordinateurs, télécopieurs et autres terminaux de communication comprennent des systèmes d'exploitation ne permettant pas d'émettre ou de recevoir des télécopies, de la voix ou des fichiers de données, à travers un réseau numérique à intégration de services (RNIS). A titre d'exemple de tels systèmes d'exploitation, on peut citer les systèmes des marques protégées "Windows 95" ou "Windows NT", fabriqués par la société Microsoft.

Pour permettre à ces terminaux d'utiliser néanmoins le réseau RNIS, on les équipe d'un adaptateur RNIS, ou modem RNIS, et d'une interface logicielle RNIS, dite "CAPI" (Common ISDN Application Programing Interface-interface RNIS commune de programmation d'application).

L'adaptateur RNIS est un périphérique, externe au terminal, ou une carte, interne au terminal.

L'interface logicielle RNIS est implémentée dans le terminal et permet d'étendre les capacités du système d'exploitation au réseau RNIS. Elle comprend trois couches logicielles: une couche basse physique, une couche intermédiaire de liaison de données et une couche haute de protocole RNIS.

La couche basse physique est liée à l'adaptateur RNIS. Il en résulte qu'il faut implémenter une nouvelle interface RNIS dans le terminal, dès que l'on change des composants de l'adaptateur RNIS, notamment en cas d'évolution du matériel. Or, ce type de matériel évolue très rapidement. La présente invention vise d'abord à pallier cet inconvénient.

A cet effet, l'invention concerne un procédé pour la communication d'un terminal de communication à travers un réseau RNIS, par l'intermédiaire d'un adaptateur RNIS, dans lequel, après avoir implémenté au moins une couche logicielle supérieure et une couche logicielle inférieure d'une interface RNIS respectivement dans le terminal et dans l'adaptateur, on connecte l'adaptateur au terminal, la couche inférieure s'enregistre auprès de la couche supérieure et, les deux couches comportant chacune une librairie de fonctions, elles s'échangent des informations d'adressage de leurs fonctions respectives afin d'appeler ultérieurement leurs fonctions mutuelles à l'aide desdites informations d'adressage.

D'emblée, on notera que, comme l'homme du métier le sait bien, "l'appel" d'une fonction commande l'exécution de cette fonction.

Grâce à l'éclatement de l'interface RNIS en au moins une couche logicielle inférieure et une couche logicielle supérieure, respectivement implémentées dans l'adaptateur et dans le terminal, il suffit de modifier la couche de l'adaptateur lorsque le matériel évolue.

En outre, grâce au processus d'enregistrement et d'échange des informations d'adressage de fonction, la mise en service de l'adaptateur s'effectue automatiquement, après la connexion de l'adaptateur au terminal.

De préférence, les couches s'échangent des pointeurs d'adressage de leurs fonctions.

Grâce à cela, le terminal et l'adaptateur ne s'échangent que peu d'informations.

L'invention concerne également un dispositif pour communiquer à travers un réseau RNIS, pour la mise en oeuvre du procédé explicité ci-dessus, comportant au moins une couche logicielle d'une interface RNIS, interne au dispositif, et des moyens d'interface pour assurer la communication entre la couche interne et une autre couche de l'interface RNIS, externe au dispositif.

Avantageusement, la couche interne comportant une librairie de fonctions, elle est agencée pour transmettre à la couche externe des informations d'adressage desdites fonctions, par l'intermédiaire des moyens d'interface.

Avantageusement encore, la couche externe comportant une librairie de fonctions, la couche interne est agencée pour acquérir des informations d'adressage des fonctions de la couche externe, par l'intermédiaire des moyens d'interface.

De préférence, la couche interne est agencée pour appeler une fonction de la couche externe, à l'aide des informations d'adressage correspondantes, par l'intermédiaire des moyens d'interface.

Dans une première forme de réalisation, le dispositif consistant en un adaptateur RNIS, la couche interne est une couche basse physique.

La librairie de fonctions de la couche basse physique peut comprendre au moins l'une des fonctions du groupe comportant l'activation de la couche basse, la connexion à un canal B, la déconnexion d'un canal B, l'émission de données dans un canal B, la réception de données dans un canal B, l'émission de données dans un canal D, la réception de données dans un canal D, le regroupement de canaux B, l'annulation des actions en cours exécutées par la couche basse.

Dans une deuxième forme de réalisation, le dispositif consistant en un terminal de communication d'un réseau RNIS, il est prévu une couche haute de protocole RNIS et une couche intermédiaire de liaison de données.

La librairie de fonctions de la couche intermédiaire peut comprendre au moins l'une des fonctions du groupe comportant la confirmation de l'activation de la couche externe, l'indication de l'état de la couche externe, la demande de libération d'un canal, la configuration de l'adaptateur RNIS, la suppression de l'enregistrement de la couche externe, l'accomplissement de l'annulation des actions en cours exécutées par l'adaptateur RNIS.

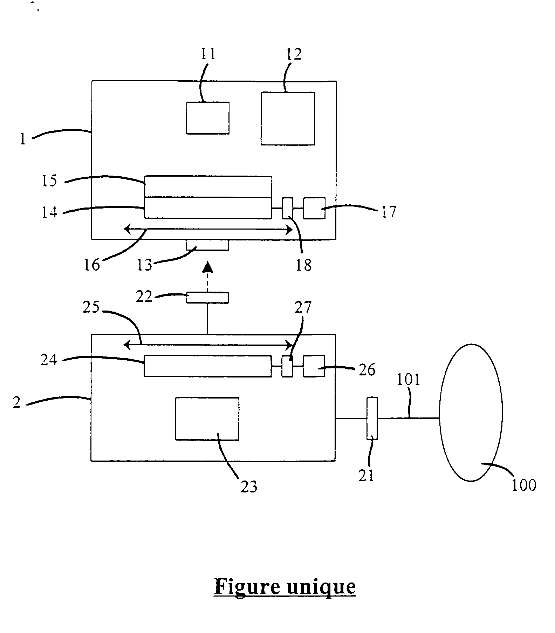

L'invention sera mieux comprise à l'aide de la description suivante du procédé de connexion d'un terminal de communication à un adaptateur RNIS, selon un mode de réalisation particulier de l'invention, ainsi que du terminal et de l'adaptateur pour la mise en oeuvre du procédé, en référence à la figure unique annexée qui représente un schéma du terminal de communication et de l'adaptateur.

D'emblée, on rappelle qu'une ligne téléphonique d'un réseau RNIS (Réseau Numérique à Intégration de Services) comprend deux canaux B de transmission de données utiles (voix, télécopies, fichiers, etc.) et un canal D de signalisation, pour la transmission de données de signalisation.

Le terminal de communication 1 est un terminal informatique, en l'espèce un ordinateur de type PC, comprenant un système informatique d'exploitation 11, diverses applications RNIS 12 pour communiquer à travers un réseau téléphonique RNIS 100 et un port 13, ici un port USB (Universal Serial Bus - bus série universel), de connexion à un périphérique, et notamment à un adaptateur RNIS.

Les applications RNIS 12 comprennent ici une application de téléphonie, une application de télécopie et une application de transfert de fichiers de données.

L'adaptateur RNIS 2, ou "modem RNIS", est ici un périphérique externe au terminal 1. Il comprend une prise 21 de connexion au réseau RNIS 100, une prise 22 de connexion au terminal de communication 1 et un module de modulation/démodulation 23, destiné à adapter les signaux de données émis et reçus par le terminal 1, à travers le réseau RNIS 100.

Le système d'exploitation du terminal 1, en l'espèce Windows 98 / Windows NT®, est dépourvu de capacités RNIS pour la téléphonie. En d'autres termes, il ne permet pas au terminal 1 d'utiliser le réseau RNIS 100 pour communiquer. Un logiciel d'interface RNIS, en l'espèce l'interface "CAPI" définie par la norme ETSI "ETS 300 325", permet d'étendre les capacités du système d'exploitation au réseau RNIS 100. L'interface CAPI comprend trois couches logicielles: une couche inférieure, ou basse, physique L1 24, une couche intermédiaire de liaison de données L2 14 et une couche supérieure, ou haute, de protocole RNIS L3 15, respectivement de niveaux un, deux et trois dans la classification OSI.

La couche L1 24 est liée aux composants de l'adaptateur RNIS 2, autrement dit au matériel, ou "hardware" selon le vocabulaire utilisé par l'homme du métier. Elle est implémentée dans l'adaptateur RNIS 2. Les couches de niveaux deux L2 14 et trois L3 15 sont implémentées dans le terminal 1.

L'adaptateur RNIS 2 est un périphérique "P&P" (Plug & Play - connecter & utiliser) et le système d'exploitation 11 est agencé pour supporter les périphériques P&P. Un périphérique P&P est tel que, lorsqu'on fait démarrer ou redémarrer un terminal informatique, comportant un système d'exploitation supportant les périphériques P&P, après y avoir connecté le périphérique, celui-ci indique sa présence au système d'exploitation du terminal et s'identifie, suivant un protocole spécifique. Le système d'exploitation détecte ainsi la présence du périphérique, le reconnaît et le rend automatiquement opérationnel et utilisable.

Le terminal 1 comprend en outre une interface logicielle 16 de communication entre la couche L2 14, interne au terminal 1, et la couche L1 24, externe au terminal 1. De la même manière, l'adaptateur RNIS 2 comprend une interface logicielle 25 de communication entre la couche L1 24, interne à l'adaptateur 2, et la couche L2 14, externe à l'adaptateur 2.

Les couches L2 14 et L1 24 comprennent chacune une librairie de fonctions mémorisées 17, 26 et un tableau 18, 27 de pointeurs d'adressage de ces fonctions, permettant de repérer l'emplacement de la fonction en mémoire. Les fonctions de chaque couche 14 (24) sont destinées à être exécutées par cette couche 14 (24), par un appel de la fonction considérée.

La librairie 17 de la couche L2 14 contient les fonctions suivantes:
- confirmation de l'activation de la couche L1 24;
- indication de l'état de la couche L1 24;
- demande de libération d'un canal;
- suppression d'un enregistrement;
- accomplissement de l'annulation des actions en cours, exécutées par l'adaptateur 2.

La librairie 26 de la couche L1 24 contient les fonctions suivantes:
- activation de la couche L1 24;
- connexion à un canal B;
- déconnexion d'un canal B;
- envoi de données dans le canal D;
- envoi de données dans le canal B;
- réception de données dans le canal D;
- réception de données dans le canal B;
- regroupement des canaux B;
- annulation des action en cours, exécutées par l'adaptateur 2.

Les interfaces de communication 16, 25 sont destinées à assurer la communication entre les couches L1 24 et L2 14. En fonctionnement, après avoir connecté la prise de connexion 22 de l'adaptateur 2 au port USB 13 du terminal 1, les couches L1 24 et L2 14 communiquent l'une avec l'autre par l'intermédiaire des interfaces 16, 25, au travers du port USB 13 et de la prise 22.

L'interface de communication 16 du terminal 1 est ainsi destinée à assurer l'exécution des actions suivantes:
- enregistrement de la couche L1 24 dans la couche L2 14;
- transmission du tableau de pointeurs 18 à la couche L1 24;
- acquisition du tableau de pointeurs 27 de la couche L1 24;
- appel d'une fonction de la couche L1 24, à l'aide du pointeur de cette fonction.

L'interface de communication 25 de l'adaptateur 2 est destinée à assurer l'exécution des actions suivantes:
- enregistrement de la couche L1 24 auprès de la couche L2 14;
- transmission du tableau de pointeurs 27 à la couche L2 14;
- acquisition du tableau de pointeurs 18 de la couche L2 14;
- appel d'une fonction de la couche L2 14, à l'aide du pointeur de cette fonction.

Après la description structurelle et fonctionnelle du terminal 1 et de l'adaptateur RNIS 2, le procédé pour la communication du terminal 1 à travers le réseau RNIS 100, par l'intermédiaire de l'adaptateur RNIS 2, va maintenant être explicité.

Pour connecter l'adaptateur RNIS 2 au terminal 1, un utilisateur connecte la prise de connexion 22 au port USB 13. Par ailleurs, l'utilisateur connecte l'adaptateur RNIS 2 à une ligne téléphonique 101 du réseau RNIS 100.

Par souci de clarté, on notera d'emblée que la communication entre les couches L1 24 et L2 14 s'effectue par l'intermédiaire des interfaces de communication 25 et 16, au travers du port USB 13 et de la prise 22.

La couche L1 24 de l'adaptateur 2 s'enregistre auprès de la couche L2 14, ici par envoi d'un IRP (In/out Request Packets - paquets de requête entrée/sortie), qui est un objet spécifique du système d'exploitation Windows 11, et transmet le tableau de pointeurs 27 à la couche L2 14. La couche L2 14 enregistre la couche L1 24, puis acquiert et mémorise le tableau de pointeurs 27 et, en réponse, transmet le tableau de pointeurs 18 à la couche L1 24, qui l'acquiert et le mémorise.

L'adaptateur 2 peut être connecté au terminal 1, soit lorsque le terminal 1 est allumé (c'est-à-dire en fonctionnement), soit lorsque le terminal 1 est éteint. Dans le premier cas, le processus d'enregistrement et d'échange des tableaux de pointeurs est exécuté dès la connexion de l'adaptateur RNIS 2 au terminal 1. Ainsi, grâce au processus d'enregistrement et d'échange des tableaux de pointeurs, l'adaptateur RNIS 2 est "hot plug" (connexion en marche): il peut être connecté au terminal, alors que celui-ci est en marche, et être immédiatement utilisé, sans qu'il soit nécessaire de faire redémarrer le terminal 1. Dans le second cas, il est exécuté lors du démarrage du terminal 1.

Après l'échange des tableaux de pointeurs 18, 27, les couches, L1 24 et L2 14, peuvent communiquer l'une avec l'autre, par des appels de fonctions, effectués à l'aide des pointeurs correspondants: pour appeler une fonction de l'autre couche 24 (14), chaque couche 14 (24) transmet à l'autre couche 24 (14) le pointeur de la fonction considérée. L'appel de la fonction commande l'exécution de cette fonction.

Le procédé de communication du terminal 1, à travers le réseau RNIS 100, au travers de l'adaptateur RNIS 2, va maintenant être explicité.

Pour établir une communication entre le terminal 1 et un terminal correspondant, à travers le réseau RNIS 100, il convient au préalable d'activer la couche L1 24 de l'adaptateur RNIS 2. Pour cela, la couche L2 14 appelle la fonction "activation de la couche L1", en adressant le pointeur de cette fonction à la couche L1 24. Sur appel de la fonction, la couche L1 24 est activée. Après son activation, la couche L1 24 appelle la fonction "confirmation d'activation de la couche L1", en adressant le pointeur de cette fonction à la couche L2 14. La couche L1 24 indique ainsi à la couche L2 14 que l'activation requise a effectivement été réalisée.

Pour émettre et/ou recevoir des données par l'un des canaux B de la ligne RNIS 101, il faut au préalable connecter l'adaptateur RNIS 2 au canal B considéré. Pour cela, la couche L2 14 appelle la fonction "connexion à un canal B", en adressant le pointeur de cette fonction à la couche L1 24. Sur appel de cette fonction, l'adaptateur RNIS 2 se connecte à l'un des canaux B de la ligne RNIS 101.

De la même manière, pour que l'adaptateur RNIS 2 se déconnecte du canal B, la couche L2 14 appelle la fonction "déconnexion du canal B", en adressant le pointeur de cette fonction à la couche L1 24.

Lorsque l'adaptateur RNIS 2 est connecté à un canal B, la couche L2 14 appelle la fonction "émission de données dans le canal B", en adressant le pointeur de cette fonction à la couche L1 24, pour émettre des données à travers le canal B auquel l'adaptateur RNIS 2 est connecté. De la même manière, la couche L2 14 appelle la fonction "réception de données dans le canal B", en adressant le pointeur de cette fonction à la couche L1 24, pour recevoir des données à travers le canal B auquel l'adaptateur RNIS 2 est connecté.

Pour émettre, ou recevoir, des données de signalisation à travers le canal D, la couche L2 14 appelle la fonction "émission de données dans le canal D", ou la fonction "réception de données dans le canal D", en adressant le pointeur de la fonction considéré à la couche L1 24.

Pour utiliser les deux canaux B pour l'émission et la réception de données utiles à travers le réseau RNIS 100 et ainsi augmenter la capacité du débit de données utiles, les deux canaux B de la ligne téléphonique 101 peuvent être regroupés. Pour cela, la couche L2 14 appelle la fonction "regroupement des canaux B", en adressant le pointeur de cette fonction à la couche L1 24. L'adaptateur RNIS 2 regroupe alors les deux canaux B et les utilise pour émettre et recevoir les données utiles.

Pour annuler toutes les actions en cours, exécutées par l'adaptateur RNIS 2, la couche L2 appelle la fonction "annulation", en adressant le pointeur de cette fonction à la couche L1 24. L'adaptateur 2 annule alors toutes les actions en cours d'exécution (réception / émission de données, etc.), puis appelle la fonction "accomplissement de l'annulation", en adressant le pointeur de cette fonction à la couche L2 24, afin d'indiquer à la couche L2 24 que l'exécution des actions en cours a effectivement été interrompue. L'annulation des actions en cours est requise notamment, en cas d'interruption d'une communication à travers le réseau RNIS 100.

Pour indiquer son état à la couche L2 24, la couche L1 14 active au préalable la fonction "indication d'état de la couche L1", en adressant le pointeur de cette fonction à la couche L2 24, puis indique son état à la couche L2.

Lorsque l'adaptateur RNIS 2 reçoit un appel téléphonique entrant, alors que les deux canaux B sont utilisés pour une communication à travers le réseau RNIS 100, la couche L1 24 active la fonction "demande de libération d'un canal"; en adressant le pointeur de cette fonction à la couche L2 14. Le terminal 1 signale alors l'appel entrant à l'utilisateur, par exemple par émission d'un signal sonore. Si l'utilisateur commande l'interruption de la communication en cours, les canaux B sont libérés et le terminal 1 demande à l'adaptateur RNIS 2 la reconnexion à un canal B, pour recevoir l'appel entrant, comme précédemment explicité.

Lorsque l'adaptateur RNIS 2 est déconnecté du terminal 1, la couche L 1 24 supprime son enregistrement dans la couche L2 14, autrement dit se "désenregistre", en appelant la fonction "suppression d'enregistrement", en adressant le pointeur de cette fonction à la couche L2 24.

Les librairies de fonctions des couches des niveaux un et deux pourraient comprendre des fonctions autres que celles énumérées dans la description qui précède. La librairie de la couche L2 pourrait notamment comprendre une fonction de configuration RNIS permettant de configurer l'adaptateur RNIS, pour définir un numéro de SDA (Sélection Directe à l'Arrivée) par exemple.

L'adaptateur RNIS pourrait se présenter sous la forme d'une carte, par exemple de type PCMCIA, que l'on connecte à des connecteurs internes au terminal. Toutefois, malgré cette connexion interne, la carte est fonctionnellement un élément externe au terminal, comme le périphérique. Il en résulte que la couche physique de l'interface RNIS, implémentée dans la carte, est une couche externe vis-à-vis du terminal et, à l'inverse, les couches de l'interface RNIS, implémentées dans le terminal, sont des couches externes vis-à-vis de la carte.

Dans la description qui précède, l'interface RNIS est destinée à étendre les capacités du système d'exploitation du terminal. Plus généralement, l'invention s'applique à tout terminal comportant une interface RNIS de liaison au réseau RNIS, permettant au terminal de communiquer à travers le réseau RNIS.

## Revendications

1. Procédé pour la communication d'un terminal de communication (1) à travers un réseau RNIS (100), par l'intermédiaire d'un adaptateur RNIS (2), dans lequel, après avoir implémenté au moins une couche logicielle supérieure (14) et une couche logicielle inférieure (24) d'une interface RNIS, respectivement dans le terminal (1) et dans l'adaptateur (2), on connecte l'adaptateur (2) au terminal (1), la couche inférieure (24) s'enregistre auprès de la couche supérieure (14) et, les deux couches (14, 24) comportant chacune une librairie de fonctions (17, 26), elles s'échangent des informations (18, 27) d'adressage de leurs fonctions respectives afin d'appeler ultérieurement leurs fonctions mutuelles à l'aide desdites informations d'adressage.

2. Procédé selon la revendication 1, dans lequel les couches (14, 24) s'échangent des pointeurs (18, 27) d'adressage de leurs fonctions.

3. Procédé selon l'une des revendications 1 et 2, dans lequel, lorsqu'on déconnecte l'adaptateur (2) du terminal (1), la couche inférieure (24) commande la suppression de son enregistrement dans la couche supérieure (14).

4. Procédé selon l'une des revendications 1 à 3, dans lequel la couche supérieure (14) appelle au moins l'une des fonctions de la librairie (26) de la couche inférieure (24) comportant l'activation de la couche inférieure (24), la connexion à un canal B, la déconnexion d'un canal B, l'émission de données dans un canal B, la réception de données dans un canal B, l'émission de données dans un canal D, la réception de données dans un canal D, le regroupement de canaux B, l'annulation des actions en cours exécutées par la couche inférieure (24).

5. Procédé selon l'une des revendications 1 à 4, dans lequel la couche inférieure (24) appelle au moins l'une des fonctions de la librairie (17) de la couche supérieure (14) comportant la confirmation de l'activation de la couche inférieure (24), l'indication de l'état de la couche inférieure (24), demande de libération d'un canal, la configuration de l'adaptateur RNIS (2), la suppression de l'enregistrement de la couche inférieure (24) et l'accomplissement d'une annulation des actions en cours exécutées par la couche inférieure (24).

6. Dispositif pour communiquer à travers un réseau RNIS (100), pour la mise en oeuvre du procédé de la revendication 1, comportant au moins une couche logicielle (14, 15; 24) d'une interface RNIS, interne au dispositif, et des moyens d'interface (16; 25) pour assurer la communication entre la couche interne (14; 24) et une autre couche (24; 14) de l'interface RNIS, externe au dispositif.

7. Dispositif selon la revendication 6, dans lequel, la couche interne (14; 24) comportant une librairie de fonctions (17; 26), elle est agencée pour transmettre à la couche externe (24; 14) des informations (18; 27) d'adressage desdites fonctions, par l'intermédiaire des moyens d'interface (16; 25).

8. Dispositif selon l'une des revendications 6 et 7, dans lequel, la couche externe (24; 14) comportant une librairie de fonctions (26; 17), la couche interne est agencée pour acquérir des informations d'adressage des fonctions de la couche externe (24; 14), par l'intermédiaire des moyens d'interface (16; 25).

9. Dispositif selon la revendication 8, dans lequel la couche interne est agencée pour appeler une fonction de la couche externe (24; 14), à l'aide des informations d'adressage correspondantes, par l'intermédiaire des moyens d'interface (16; 25).

10. Dispositif selon l'une des revendications 6 à 9, dans lequel, le dispositif consistant en un adaptateur RNIS (2), la couche interne (24) est une couche basse physique.

11. Dispositif selon la revendication 10, dans lequel la couche interné (24) est agencée pour s'enregistrer auprès de la couche externe (14), par l'intermédiaire des moyens d'interface (25).

12. Dispositif selon l'une des revendications 10 et 11, dans lequel la librairie de fonctions (26) de la couche basse physique (24) comprend l'une au moins des fonctions du groupe comportant l'activation de la couche basse (24), la connexion à un canal B, la déconnexion d'un canal B, l'émission de données dans un canal B, la réception de données dans un canal B, l'émission de données dans un canal D, la réception de données dans un canal D, le regroupement de canaux B, l'annulation des actions en cours exécutées par l'adaptateur RNIS (2).

13. Dispositif selon l'une des revendications 6 à 9, dans lequel, le dispositif consistant en un terminal de communication (1) d'un réseau RNIS (100), il est prévu une couche haute de protocole RNIS (15) et une couche intermédiaire (14) de liaison de données.

14. Dispositif selon la revendication 13, dans lequel la couche intermédiaire est agencée pour enregistrer la couche externe, par l'intermédiaire des moyens d'interface (16).

15. Dispositif selon l'une des revendications 13 et 14, dans lequel la librairie de fonctions (17) de la couche intermédiaire (14) comprend au moins l'une des fonctions du groupe comportant la confirmation de l'activation de la couche externe (24), l'indication de l'état de la couche externe (24), l'indication d'un appel entrant, la configuration de l'adaptateur RNIS (2), la suppression de l'enregistrement de la couche externe (24), l'accomplissement de l'annulation des actions en cours exécutées par l'adaptateur RNIS (2).
